# EUROPEAN PATENT SPECIFICATION

(11) **EP 4 481 780 B1**
(45) Date of publication and mention of the grant of the patent: **11.06.2025**
(21) Application number: 23180985.6
(22) Date of filing: 22.06.2023
(51) Int. Cl.: H01H 1/36, H01H 3/02, H01H 19/58, H02J 7/00

(54) **SWITCHING DEVICE AND ENERGY STORAGE SYSTEM**
SCHALTVORRICHTUNG UND ENERGIESPEICHERSYSTEM
DISPOSITIF DE COMMUTATION ET SYSTÈME DE STOCKAGE D'ÉNERGIE

(43) Date of publication of application: 25.12.2024
(73) Proprietor: Munich Electrification GmbH, 81373 Munich (DE)
(72) Inventor: Tóth, Bálint, 81373 Munich (DE); Lachner, Philipp, 81373 Munich (DE)
(74) Representative: Grünecker Patent- und Rechtsanwälte PartG mbB

(56) References cited:
- EP-A1- 1 267 373
- EP-A1- 3 624 228
- US-A- 3 718 848
- US-A1- 2022 311 253

## Description

The present invention relates to a switching device, which is capable of changing a connection state of at least two batteries of a high voltage energy storage system between a series connection and a parallel connection, and to an energy storage system comprising the switching device.

With the advanced development of battery driven vehicles, such as electric vehicles (EV) or hybrid electric vehicles (HEV), high voltage energy storage systems become more and more common in vehicles. Nowadays, such high voltage energy storage systems are typically capable of supplying voltages in a range between 400 V and 1 kV or even higher voltages. In these HV systems, the use of contactor devices for connecting and disconnecting electronic circuits in an energy storage system is known state of the art.

Conventionally, contactor devices are capable of reversibly changing their state between a closed state, where current flow through the contactor device is possible and an open state, where current flow through the contactor device is prevented. In addition, it is known to use overcurrent protection devices, like pyro-fuses, for irreversibly break the voltage supply in the high voltage energy storage system. This is for example necessary, when an extensive overcurrent or a malfunction is detected in the electronic circuits of the energy storage system or in case that a vehicle, which is driven by the power supplied from the energy storage system, has an accident.

However, depending on applications, in which the energy storage system is used, more switching states may be desired. Especially, in a battery driven vehicle, high voltage driving batteries, which supply voltages in the range of 800V are more and more used. For providing such high voltages, a plurality of battery modules (or battery packs) are electrically connected to form the high voltage battery. However, since it was previously common to use 400 V as output voltage of driving batteries, many chargers or charging stations are only capable of providing charging voltages up to 400 V, but not higher voltages and especially not charging voltages in the 800 V range. For solving this problem, it is known to electrically connect two batteries (or battery strings) of the high voltage driving battery, each with an output voltage of 400 V, in parallel for charging, and to electrically connect the same batteries (or battery strings) in series for driving, then outputting an output voltage of 800 V.

However, with the above described single-pole contactor devices, at least three contactor devices are necessary for electrically connecting two batteries (or battery strings) selectively in parallel or in series. Therefore, there is a need for new switching devices, which allow for a simplified configuration for electrically connecting two batteries (or battery strings) selectively in parallel or in series.

For example, DE 10 2021 104 142 A1 discloses a switching device having a contact arrangement with a first contact element and a second contact element for selectively bridging interruptions of two switching paths of the switching device. The contact arrangement is moved by an actuator, in order to switch the switching device between a first switching state, in which the switching device is capable of connecting two batteries in series, and a second switching state, in which the switching device is capable of connecting two batteries in parallel.

US 2022/311253 A1 discloses a rechargeable battery jump starting device with a leapfrog charging system, which, for example, can sequentially charge multiple batteries of the rechargeable battery jump starting device. A control switch of a 12V/24V selective type switch can be switched by rotating a control knob to selectively connect two batteries in parallel or in series.

US 3 718 848 A discloses an electrical system of a vehicle, which comprises first and second battery sets and a selector switch, which selectively connects the first and second battery sets in parallel or in series. The selector switch includes two bus bars, which are rotatably mounted relative to a mounting plate for selectively connecting the first and second battery sets in parallel or in series.

EP 3 624 228 A1 discloses a serial-to-parallel converting apparatus, which includes an input plate connected to positive electrodes and negative electrodes of a plurality of battery cells, respectively and an output plate spaced apart from the input plate and connected to an external terminal. A rotary plate is rotatably interposed between the input plate and the output plate to electrically connect the input plate and the output plate, wherein the rotary plate converts serial connection and parallel connection of the plurality of battery cells by rotating.

EP 1 267 373 A1 discloses the use of a worm gear transmission in a switching device.

However, the inventors of the present inventors have found that there is still room for improvement of such a switching device, since the known switching devices have a relative complex contact configuration that result in a relatively high weight.

Accordingly, it is an object of the present invention to provide a switching device, which allows to change the connection state of a high voltage battery by using a simplified contact configuration. Furthermore, it is an object of the present invention to provide a space and weight saving as well as economic solution.

This object is solved by the subject matter of the independent claims. Advantageous aspects of the present disclosure are the subject matter of the dependent claims.

Examples, aspects and embodiments presented in the following and not necessarily falling under the scope of the claims are provided in the application to better understand the invention.

According to the present invention, there is provided a switching device as set forth in claim 1. Further embodiments are inter alia disclosed in the dependent claims. The switching device comprises a fixed bus bar arrangement, which comprises at least a pair of fixed input bus bars and a pair of fixed output bus bars, a moveable bus bar arrangement, which comprises at least a first connection bus bar and a second connection bus bar. The switching device further comprises at least one actuation element, which is configured to change a position of the moveable bus bar arrangement at least to and from a first switching position and to and from a second switching position, wherein in the first switching position, each of the fixed input bus bars is electrically connected to respectively one of the fixed output bus bars, and in the second switching position, the pair of fixed input bus bars is electrically connected to each other, and wherein the moveable bus bar arrangement is rotated by the at least one actuation element for changing the position of the moveable bus bar arrangement.

By the introduction of the rotational movement of the moveable bus bar arrangement, the present disclosure provides a switching device for switching between two output voltage levels, with a more efficient contact configuration. This allows for a substantial reduction of weight and necessary space consumed by the switching device compared to conventional solutions. Further, it allows for lower contact resistance in the switching paths of the switching device due to a reduction of contact points, a higher mechanical safety due to an inherently avoidance of short circuits and a reduced risk for arching. Hereby, a rotation of the moveable bus bar arrangement should in particular mean a rotation around a rotational axis, which does not change the alignment of the connection bus bars of the moveable bus bar arrangement with respect to each other, but only the orientation of the moveable bus bar arrangement as a whole.

The switching device further comprises a transmission unit having at least one driven member and at least one output member, which are coupled to one another in a rotationally driving manner in a first angular range, wherein the moveable bus bar arrangement is supported on the at least one output member, and wherein the driven member is rotated by the at least one actuation element for changing the position of the moveable bus bar arrangement.

By implementing the transmission unit for transmitting the forces generated from the at least one actuation element to the moveable bus bar arrangement, the switching device allows for an efficient force transmission to drive the rotational movement of the moveable bus bar arrangement between the switching positions.

The at least one driven member applies an axial force upon the at least one output member, when the at least one driven member is driven outside of the first angular range, such that the at least one output member moves the moveable bus bar arrangement along a direction at least substantially parallel to the axis of rotation of the driven member. In this manner, it is allowed to transform the torque transmitted to the at least one driven member into an axial force, so that the torque can be used for moving the moveable bus bar arrangement in a linear movement along the direction parallel to the axis of rotation of the driven member with an efficient force transmission. This allows to reduce the friction applied on the contact points of the fixed bus bars and on the moveable connection bus bars.

According to a second aspect, a rotational movement of the at least one output member is restricted to the first angular range. In this manner, the third aspect allows for a precise positioning of the moveable bus bar arrangement in the first switching position and in the second switching position

According to a third aspect, the at least one output member comprises a toothed hub profile, which mates with an interlocking notch profile of the at least one driven member in a form-fitting and rotationally driving manner in the first angular range, and which disengages from the toothed hub profile, when the at least one driven member is driven outside of the first angular range. Accordingly, the fifth aspect allows to enhance the efficiency of torque transmission between the at least one driven member and the at least one output member in the first angular range. In addition, it is prevented that a torque is applied by the at least one driven member on the at least one output member outside of the first angular range, so that the transmission unit can efficiently transmit the force generated by the at least one actuation element.

According to a fourth aspect, the hubs of the toothed hub profile are formed as beveled wedges. In this manner, the sixth aspect allows for a friction-reduced decoupling of the at least one output member from the at least one driven member, when the at least one driven member is driven outside the first angular range.

According to a fifth aspect, the at least one driven member is mechanically connected to a shaft structure, which transfers a torque generated by the at least one actuation element for changing the position of the moveable bus bar arrangement to the at least one driven member. Hereby, the torque may be transmitted from the at least one actuation element to the shaft structure through a gear, which can define an optimal gear transmission ratio for driving the shaft structure.

According to a sixth aspect, a housing of the switching device comprises at least one output member blocking element, which is configured to engage with at least one lug of the at least one output member for restricting the rotational movement of the at least one output member to the first angular range. Alternatively or in addition the housing of the switching device may comprise at least one driven member blocking element, which is configured to engage with at least one lug of the at least one driven member for restricting the rotational movement of the at least one driven member to a second angular range, the second angular range being larger than the first angular range. By the respective blocking elements, it is ensured that the movement range of the at least one driven member and the at least one output member is restricted in order to enhance the efficiency of the force transmission from the at least one actuation element to the moveable bus bar arrangement. Hereby, integrally forming the blocking elements within the housing of the switching device enables a space saving configuration of the switching device and allows for a simplification of the fabrication process. However, it is also possible to provide dedicated blocking elements, which could be arranged within the switching device as separated parts arranged separately from the housing.

According to a seventh aspect, the at least one output member blocking element comprises at least one asymmetrically formed guiding groove, which is designed to restrict a movement of the at least one output member to an axial movement, when the at least one driven member is driven outside of the first angular range. Accordingly, the guiding groove enables a linear dropping or lifting of the moveable contact arrangement when closing or opening the contacts between the moveable contact arrangement and the fixed bus bars of the switching device.

According to an eighth aspect, the at least one connection bus bar of the moveable bus bar arrangement is resiliently supported on the at least one output member by at least one biased spring element. This has the advantage to control the contact forces between the moveable bus bar arrangement and the fixed bus bars of the switching device, when the at least one moveable bus bar is pressed by the at least one output member onto the fixed bus bar arrangement. Further, the at least one biased spring element contributes in absorbing small dislocations or imbalances between the connection bus bars of the moveable bus bar arrangement.

According to a ninth aspect, in the first switching position, the first connection bus bar and the second connection bus bar electrically connect respectively one of the input bus bars to respectively one of the output bus bars. In this manner, the moveable bus bar arrangement allows to connect two batteries in parallel over a low resistive connection having only two contact points for each connecting path.

According to a tenth aspect, in the second switching position, the first connection bus bar electrically connects the pair of input bus bars with each other, and the second bus bar is electrically connected to at most one of the input bus bars or one of the output bus bars, and at least one contact point of the second connection bus bar is electrically isolated from the remaining bus bars of the fixed bus bar arrangement. In this manner, the first connection bus bar of the moveable bus bar arrangement allows to connect two batteries in series over a low resistive connection having only two contact points, while the second connection bus bar does not provide any electrical connection. By electrically isolating at least one contact point of the second connection bus bar, for example due to sufficient spacing from the remaining bus bars of the fixed bus bar arrangement, the generation of short or arcing in the switching device is prevented.

According to an eleventh aspect, the switching device further comprises a first input terminal, which is electrically connected to one of the fixed input bus bars, and a second input terminal, which is electrically connected to the other one of the fixed input bus bars.

According to a twelfth aspect, the at least one actuation element comprises an electric motor, which is configured to rotate the at least one driven member of the transmission unit for changing the position of the moveable bus bar arrangement. Alternatively or in addition to the fourteenth aspect a force generated by the at least one actuation element for changing the position of the moveable bus bar arrangement is transmitted by a worm gear. In this manner, it is ensured that the switching device only consumes energy when the position of the switching device is changed, while in an unpowered state of the electric motor, a position of the switching device is not changed. In this manner, the switching device allows to provide bi-stable states, and a state of the switching device is not changed when a sudden loss of power to the at least one actuation element occurs, for example resulting from a single point fault, another damage event or a communication error, but the contactor device stays in its prior state. Furthermore, the worm gear ensures a locking of the moveable bus bar arrangement in the first switching position or in the second switching position. Further, by its gear transmission ratio the worm gear contributes in providing the efficient force transmission from the at least one actuation element to the at least one driven member.

According to a thirteenth aspect, there is also provided an energy storage system comprising at least a first battery and a second battery and the switching device according to any of the preceding aspects, wherein the first battery and the second battery are electrically connected to the switching device in such a manner, that the first battery and the second battery are switchable by the switching device between a series state, in which the first battery and the second battery are electrically connected by the switching device in series, and a parallel state, in which the first battery and the second battery are electrically connected by the switching device in parallel.

Throughout this document, the term "terminal" is meant to describe a point at which a conductor from an electric device, an electric circuit or an electric component ends, and where a point is provided for electrically connecting an external electric device, an external electric circuit or an external electric component to this conductor. Furthermore, the terms "electrically connected" and "conductively coupled" describe the establishing of an electrical connection between at least two electric devices, electric components or electric conductors, which allows the flow of electric current. Hereby the electrical connection should not be restricted to a direct coupling of the terminals of the at least two electric devices, electric components or electric conductors, but other electric devices, electric components or electrical conductors may be coupled in between.

The accompanying drawings are incorporated into the specification and form a part of the specification to illustrate several examples of the present disclosure. These drawings, together with the description serve to explain the principles of the disclosure. The drawings are merely for the purpose of illustrating the preferred and alternative examples of how the disclosure can be made and used, and are not to be construed as limiting the disclosure to only the illustrated and described examples. Furthermore, several aspects of the examples may form-individually or in different combinations-solutions according to the present disclosure. The following described examples thus can be considered either alone or in an arbitrary combination thereof. Further features and advantages will become apparent from the following more particular description of the various examples of the disclosure, as illustrated in the accompanying drawings, in which like references refer to like elements, and wherein:
- **FIG. 1**: shows a schematic circuit diagram of an exemplary high voltage energy storage system;
- **FIG. 2**: shows a schematic perspective view of an exemplary switching device;
- **FIG. 3**: shows a schematic perspective view of a part of the internal components of the exemplary switching device;
- **FIG. 4**: shows another schematic perspective view of the a part of the internal components of the exemplary switching device;
- **FIG. 5**: shows a schematic top view of the exemplary switching device in the parallel connection state;
- **FIG. 6**: shows a schematic bottom view of an exemplary contact arrangement of the exemplary switching device in the parallel connection state;
- **FIG. 7**: shows a schematic top view of the exemplary switching device in the series connection state;
- **FIG. 8**: shows a schematic bottom view of an exemplary contact arrangement of the exemplary switching device in the series connection state;
- **FIG. 9**: shows another schematic top view of the exemplary switching device in the series connection state;
- **FIG. 10**: shows a schematic perspective view of an exemplary driven member of the exemplary transmission unit;
- **FIG. 11**: shows a schematic perspective view of an exemplary output member of the exemplary transmission unit;
- **FIG. 12**: shows another schematic top view of the exemplary switching device in the series connection state;
- **FIG. 13**: shows a schematic perspective view of the exemplary switching device in the series connection state;
- **FIG. 14**: shows a schematic perspective view of the exemplary switching device at a first position of the switching process from the series connection state to the parallel connection state;
- **FIG. 15**: shows a schematic perspective view of the exemplary switching device at a second position of the switching process from the series connection state to the parallel connection state;
- **FIG. 16**: shows a schematic perspective view of the exemplary switching device at a third position of the switching process from the series connection state to the parallel connection state;
- **FIG. 17**: shows a schematic perspective view of the exemplary switching device in the parallel connection state;
- **FIG. 18**: shows a schematic cross-section of the exemplary switching device.

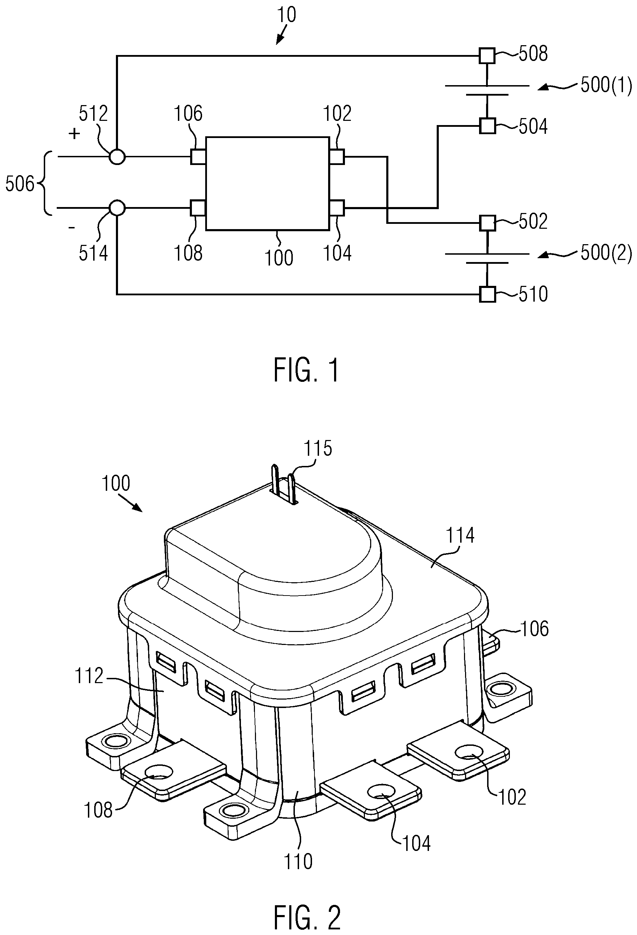

The present disclosure will now be further explained referring to the Figures, and firstly referring to Fig. 1. Fig. 1 shows a schematic circuit diagram of an exemplary high voltage energy storage system 10 that can benefit from the ideas of the present disclosure. The energy storage system 10 comprises two HV batteries 500(1) and 500(2), which, for example, form the driving battery of a battery driven vehicle, and a switching device 100. Here and in the following, it will be assumed that each of the batteries 500(1) and 500(2) has an output voltage of 400V, but also other output voltages are conceivable. Each of the batteries 500(1) and 500(2) is usually formed of several battery modules or battery packs, which are again formed of a plurality of battery cells being connected in series and/or in parallel. In general, a number of HV batteries 500 provided in the energy storage system 10 is not restricted to two, but also more batteries may be used.

The switching device 100 comprises input terminals 102 and 104. The input terminal 102 is configured to be electrically connected to a terminal 502 on the high potential side (+) of battery 500(2). The input terminal 104 is configured to be electrically connected to a terminal 504 on the low potential side (-) of battery 500(1). Further, the switching device 100 comprises output terminals 106 and 108, which are configured to be electrically connected to a high voltage bus 506, which, for example, is electrically connected to the drive train of a battery driven vehicle or to a charger (or charging station) for charging the high voltage batteries 500(1) and 500(2). The output terminal 106 is electrically connected to the high potential side (+) of the HV bus. Since the high potential side (+) of the HV bus is electrically connected by a node 512 to a terminal 508 on the high potential side (+) of battery 500(1), the output terminal 106 is also electrically connected to the terminal 508 on the high potential side (+) of battery 500(1). The output terminal 108 is electrically connected to the low potential side (-) of the HV bus. Since the low potential side (-) of the HV bus is electrically connected by a node 514 to a terminal 510 on the low potential side (-) of the battery 500(2), the output terminal 108 is also electrically connected to the terminal 510 on the low potential side (-) of the battery 500(2).

The switching device 100 is configured to switch the first battery 500(1) and the second battery 500(2) between a series connection state, in which the first battery 500(1) and the second battery 500(2) are electrically connected by the switching device 100 in series, and a parallel connection state, in which the first battery 500(1) and the second battery 500(2) are electrically connected by the switching device 100 in parallel. Accordingly, in the series connection state a voltage difference between the high potential side (+) and the low potential side (-) of the HV bus 506 is substantially equal to the sum of the voltages provided by the first battery 500(1) and the second battery 500(2) (e.g. 400V + 400V = 800V). On the other hand, in the parallel connection state a voltage difference between the high potential side (+) and the low potential side (-) of the HV bus 506 is substantially equal to the individual voltages provided by the first battery 500(1) and the second battery 500(2) (e.g. 400V). Accordingly, the switching device 100 allows to change the voltage applied to the HV bus 506 to be changed between a first lower voltage level, which may be equal to a charging voltage supplied to the batteries 500(1) and 500(2), and a second higher voltage level, which may be equal to a driving voltage for driving a battery driven vehicle.

Fig. 2 shows a schematic perspective view of an exemplary switching device 100. The switching device 100 comprises a housing 110, from which the input terminals 102 and 104 and the output terminals 106 and 108 protrude. Exemplarily, the housing comprises two parts, a housing base portion 112 and a housing cover 114. In an exemplary configuration, the housing 110 may be a sealed housing, which would allow to provide a vacuum or an electronegative gas in the space encompassed by the housing 110, to prevent the creation of sparks or arcing when switching the switching device 100. The input terminals 102 and 104 and the output terminals 106 and 108 are formed, in the illustrated example, as cut-outs, which can be screwed to a respective external electric component, such as a terminal clamp of one of the batteries 500(1) or 500(2) or a bus bar, which is electrically connected to the switching device 100. Alternatively, the input terminals 102 and 104 and the output terminals 106 and 108 may for example be formed as welding or soldering joints, which allow to weld or solder the switching device to the external electric components.

In the illustrated example, the housing 110 accommodates an electric motor 117 as an actuation element, which generates the transmission force for switching between the states of the switching device 100.For connecting the electric motor 117 to a controller of the switching device 100 the electric motor 117 is connectable with motor connection pins 115, which protrude from the housing 110 of the switching device. In alternative configurations, the electric motor 117 may be replaced by another actuation element known in the field of high voltage switching devices, for example by an electromagnetic actuator.

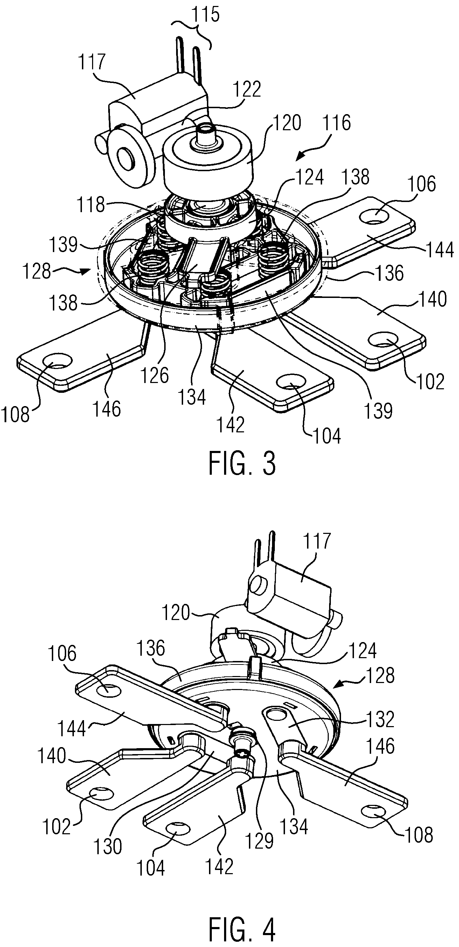

Figs. 3 and 4 show schematic perspective views of a part of the internal components of the switching device 100. As illustrated, the housing 110 of the switching device accommodates a fixed contact arrangement and a moveable bus bar arrangement. The fixed bus bar arrangement includes, in the illustrated configuration, a first input bus bar 140 and a second input bus bar 142 as a pair of input bus bars, and a first output bus bar 144 and a second output bus bar 146 as a pair of output bus bars. The input bus bars 140 and 142 are electrically connected to respectively one of the input terminals 102 and 104, in the shown example by integrally forming the input bus bars 140 and 142 with the respective input terminal. The output bus bars 144 and 146 are electrically connected to respectively one of the output terminals 106 and 108, in the shown example by integrally forming the output bus bars 144 and 146 with the respective output terminal. The moveable bus bar arrangement, which is moveable in order to change the state of the switching device 100, includes in the illustrated configuration a first connection bus bar 130 and a second connection bus bar 132 (see Fig. 4). As will be explained later, the first connection bus bar 130 and the second connection bus bar 132 are configured to electrically connect respective bus bars of the fixed bus bar arrangement depending on the intended connection state of the switching device 100.

It should be noted here that depending on application scenarios, the number of fixed bus bars and the number of moveable connection bus bars may vary from the numbers shown in the illustrated example, for example if the switching device 100 is configured to be electrically connected to more than two batteries (or battery strings) 500.

In the illustrated example, when changing the position of the moveable bus bar arrangement, a force generated by the electric motor 117 is transmitted by a transmission unit 116 to the moveable bus bar arrangement. The transmission unit 116 comprises a shaft 118 having a fixedly mounted drive gear 120. The drive gear 120 is in mesh with a worm 122, so as to form a worm gear, which is driven by the electric motor 117. The provision of the worm gear is not essential for the switching device 100, but has the advantage that the torque generated by the electric motor 117 can be transmitted with an optimized transmission ratio to the shaft 118 compared to a direct mechanical coupling between the electric motor 117 and the shaft 118 without having a gear transmission in between. Further, the provision of the worm gear can prevent reversible force transmission through the worm gear, in order to prevent that rotation is transmitted back from the shaft 118 to the electric motor 117 when the electric motor 117 is not powered. Accordingly, by implementing the force transmission through the worm gear, the switching device 100 has a self-locking function, where it is only necessary to power the electric motor 117, when changing the switching position of the switching device 100.

For selectively translating the force generated by the electric motor 117 in a linear movement of the moveable bus bar arrangement or in a rotational movement of the moveable bus bar arrangement, the transmission unit 116 comprises a driven member 124 and an output member 128, which carries the moveable bus bar arrangement. Thereby, the specific mechanical interplay between the driven member 124 and the output member 128, which will be described in the following, enables the advantageous selective driving of a linear movement or of a rotational movement of the moveable bus bar arrangement of the switching device 100.

The driven member 124 is fixedly mounted to the shaft 118, for example by integrally forming the driven member 124 on the shaft 188, so that the driven member is mechanically coupled to the drive gear 120 by the shaft 118. Accordingly, the shaft 118 transmits a torque from the drive gear 120 to the driven member 124 when the electric motor 117 is powered to change the position of the switching device 100. In the illustrated example, the driven member 124 is formed as a circular disc-shaped member with protruding arms 126, whose function will be described later. Alternatively, it is also possible that the driven member 124 has a different outer shape or that more than one driven member is mounted to the shaft 118 and interacting with the output member 128 (or more than one output member).

The output member 128 is rotatable mounted to the shaft 118, adjacent to the driven member 124. Accordingly, the shaft defines an axis of rotation for the driven member 124 and for the output member 128. In the illustrated example, the output member 128 is formed as a circular disc-shaped member. Alternatively, it is also possible that the output member 128 has a different outer shape or that more than one output member is coupled to the shaft 118 and interacting with the driven member 124 (or more than one driven member). The output member 128 is axially secured to the shaft 118 by a return spring 129, which is preferably screwed to the shaft 118 and allows the output member 128 to perform a linear motion in a direction parallel to the extension direction of the shaft 118 (also signified as an axial direction) as will be explained later.

As shown in the example of Fig. 4, the output member 128 comprises two mating half shells, one bottom half shell 134, which carries the moveable bus bar arrangement and a top half shell 136, which is imposed on the bottom half shell 134 to form the housing of the output member 128. Alternatively, it is also possible to form the housing of the output member 128 from a single piece and to mount the connection bus bars to the output member 128 for example in a molding process. For illustration purposes, the top half shell 136 of the output member 128 is only indicated in Fig. 3 by dash-dotted lines. Accordingly, it becomes visible that the first connection bus bar 130 and the second connection bus bar 132 are provided in bus bar accommodation portions 139 of the output member 128. Further, preloaded spring elements 138 are arranged in the inside of the output member 128 for resiliently supporting the connection bus bars 130 and 132 within the output member 128. This allows for better controlling the contact forces between the connection bus bars 130 and 132 and the fixed bus bars of the switching device 100 when the output member 128 applies a force on the moveable bus bar arrangement to press the moveable bus bar arrangement onto the fixed bus bar arrangement. Further, the preloaded spring elements 138 contribute in absorbing small dislocations or imbalances between the connection bus bars 130 and 132 of the moveable bus bar arrangement.

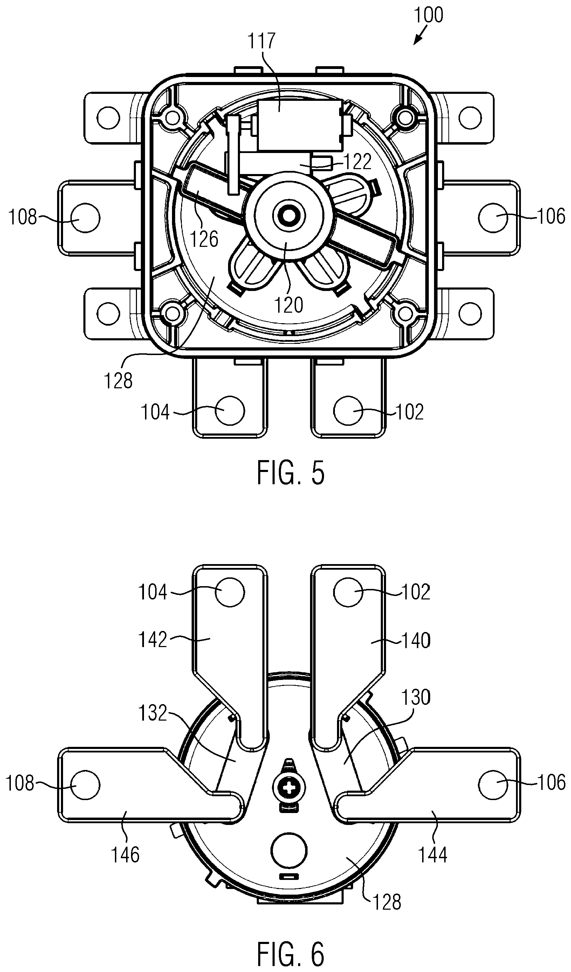

Figs. 5 and 6 schematically show the switching device 100 in a parallel connection state. Hereby, Fig. 5 shows a schematic top view of the switching device 100 without the housing cover 114 to illustrate the position of individual components of the transmission unit 116 in the parallel connection state. Fig. 6 shows a schematic bottom view of the fixed contact arrangement and of the moveable contact arrangement to illustrate the positions of the moveable bus bar arrangement in the parallel connection state. As illustrated, in the parallel connection state the moveable bus bar arrangement is in a first switching position, where the first input bus bar 140 is electrically connected by the first connection bus bar 130 to the first output bus bar 144. In addition, in the first switching position, the second input bus bar 142 is electrically connected by the second connection bus bar 132 to the second output bus bar 146. Accordingly, in the parallel connection state, the switching device 100 electrically connects two batteries, which are connected to the input terminals 102 and 104, in parallel (e.g. in the HV energy storage system 10 of Fig. 1).

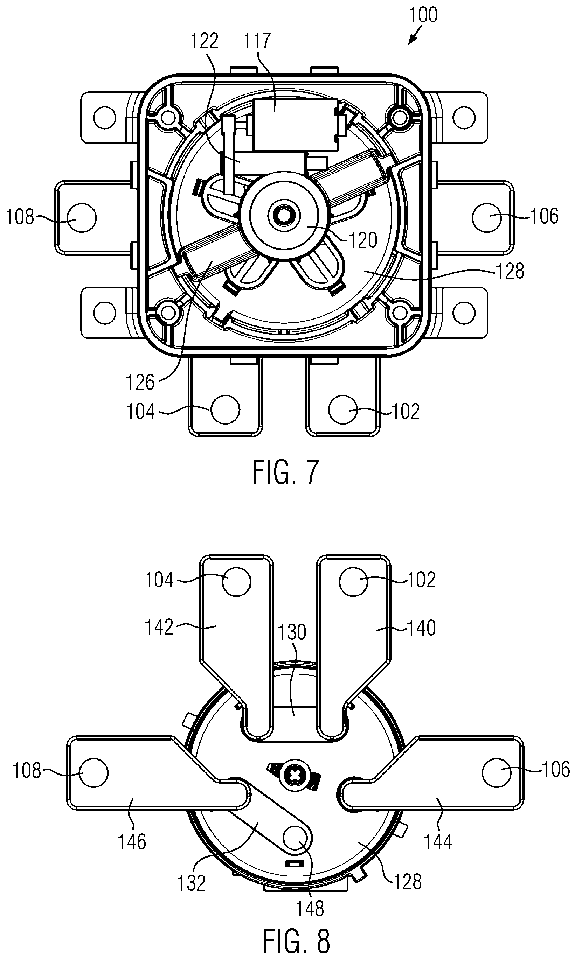

Figs. 7 and 8 schematically show the switching device 100 in a series connection state Hereby, Fig. 7 shows a schematic top view of the switching device 100 without the housing cover 114 to illustrate the position of individual components of the transmission unit 116 in the series connection state. Fig. 8 shows a schematic bottom view of the fixed contact arrangement and of the moveable contact arrangement of the switching device 100 in the series connection state to illustrate the positions of the connection bus bars 130 and 132 in the series connection state. As illustrated, in the series connection state the moveable bus bar arrangement is in a second switching position, where the first input bus bar 140 and the second input bus bar 142 are electrically connected with each other by the first connection bus bar 130. Accordingly, in the series connection state, the switching device 100 electrically connects two batteries, which are connected to the input terminals 102 and 104, in series.

While in the series connection state, the first connection bus bar 130 is in electric contact with both input bus bars 140 and 142, the second connection bus bar 132 is in electric contact with at most one of the remaining fixed bus bars. In particular, in the shown exemplary configuration the second connection bus bar 132 is in electric contact with the second output bus bar 146. The free contact point 148 of the second connection bus bar 132 is electrically isolated from the remaining fixed bus bars. In particular, in the shown exemplary configuration the second connection bus bar 132 is electrically isolated from the input bus bars 140 and 142 and from the first output bus bar 144 by a distance, which is large enough to prevent any arcing or other short circuit. Here, it should be mentioned that the necessary spacing between the free contact point 148 of the second connection bus bar 132 and the remaining fixed bus bars is especially easy to achieve due to the mounting of the connection bus bars 130 and 132 on the pivoted output member. Additional isolating elements, which ensure the isolation between the free contact point 148 of the second connection bus bar 132 and the remaining fixed bus bars are not necessary, but may be provided in addition to enhance the safety and reliability of the switching device 100.

For moving the moveable bus bar arrangement between the first switching position and the second switching position, the moveable bus bar arrangement is rotated in a plane, which is parallel to the extension directions of the connection bus bars 130 and 132 of the moveable bus bar arrangement, here with the shaft 118 as an axis of rotation. This means that the rotation of the moveable bus bar arrangement does not change the alignment of the connection bus bars 130 and 132 with respect to each other, but only the orientation of the moveable bus bar arrangement as a whole. Accordingly, the rotation of the moveable bus bar arrangement does not result, for example, in a tilting or twisting of the connection bus bars 130 and 132 compared to each other.

For rotating the moveable bus bar arrangement, the output member 128, on which the first connection bus bar 130 and the second connection bus bar 132 are mounted, is coupled to the driven member 124 in a rotationally driving manner in a first angular range. Accordingly, the output member 128 is rotated about its axis of rotation, which corresponds to the axis of rotation of the driven member 124 and is defined by the shaft 118.

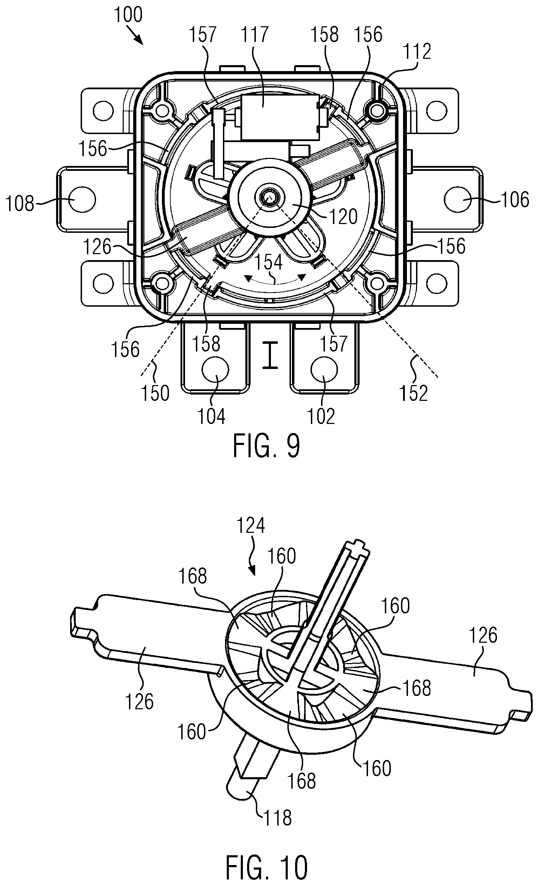

As illustrated in Fig. 9, the freedom of rotational movement of the output member 128 is restricted to the first angular range by protruding lugs 158, which protrude from the circular base of the output member 128, which interact with a wall structure 156 of the switching device, which functions as an output member blocking element. The wall structure 156 extends upwards from the base of the housing 110, in particular from the housing base portion 112, and encompasses the output member 128 in a circumferential direction. Hereby, an inner radius of the wall structure 156 is designed to be smaller than a radius of the output member 128 at the position of the protruding lugs 158. When the protruding lugs 158 reach the boarders of the first angular range, the protruding lugs 158 engage with the wall structure 156 by abutting against the wall structure 156 to stop the rotational movement of the output member 128 in the clockwise or counterclockwise. Fig. 9 shows a schematic indication of the boarders of the first angular range by the dashed lines 150 and 152, where the protruding lugs 158 engage with the wall structure 156 (for illustration purposes only indicated for one of the lugs 158). The dashed lines 150 and 152 encompass the first angular range as a movement region I of the output member 128, or more specifically as a movement region where the lugs 158 allow for a rotational movement of the output member 128. The possible direction of movement of the output member 128 in the first angular range is schematically indicated by the arrow 154. To allow for the rotation of the output member 128, and especially for the protruding lugs 158 within the first angular range, a height of an intermediate part 157 of the wall structure 156 is lowered in the first angular range compared to a height of the remaining part of the wall structure 156.

In the shown example, the wall structure 156 is provided as a single part, being integrally formed with the base portion of the housing 110. However, this is merely an example, and the wall structure 156 could be also formed of several separated parts, and/or arranged within the switching device 100 separately from the housing 110. Further, in the shown example, two lugs 158 are provided for the output member 128. However, depending on application scenarios also another number of lugs 158 is possible, and the design of the wall structure 156 (or of another output member blocking element) may be adapted accordingly.

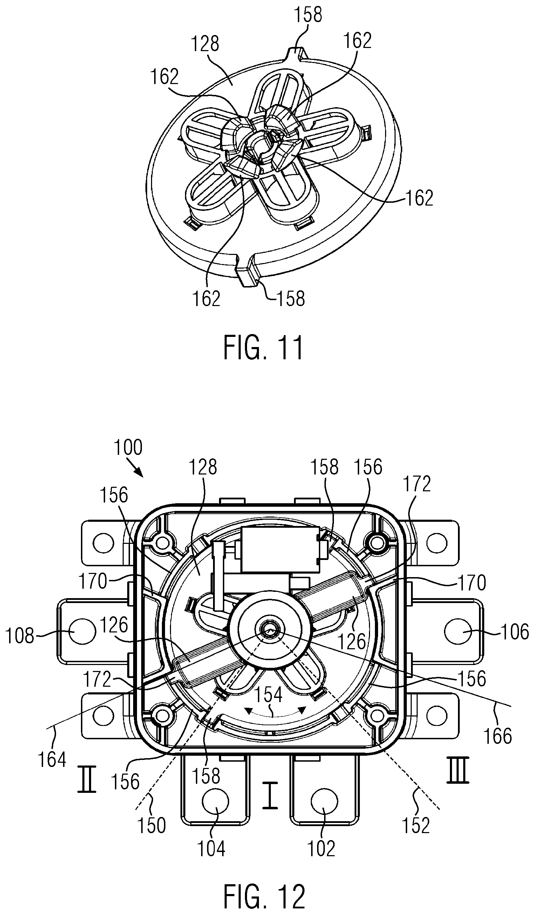

As outlined above, for being rotated the output member 128 is coupled in a rotationally driving manner to the driven member 124, at least when the driven member 124 drives the rotational movement of the output member 128 between the boarders of the first angular range. This allows the driven member 124 to transfers the torque generated by the electric motor 117 to the output member 128 and to rotate the output member 128 in the first angular range. For coupling the output member 128 to the driven member 124 in the first angular range, the driven member can comprise on its bottom side a plurality of notches 160 (see Fig. 10), but at least one notch 160, to form a notch profile. The output member 128 can comprise on its top side, i.e. on the side facing away from the connection bus bars 130 and 132, a plurality of hubs 162 (see Fig. 11), but at least one hub 162, to form an interlocking hub profile, which can mate with the notch profile of the driven member. For achieving an optimal torque transmission, the number of hubs 162 preferably corresponds to the number of notches 160, and the hubs 162 preferably mate with the notches 160 in a form-fitting manner, when the driven member 124. However, also other configurations are possible, depending on application scenarios.

While the rotational movement of the moveable bus bar arrangement between the first switching position and the second switching position has many advantages like allowing to reduce the overall weight of the switching device 100, a pure rotational movement of the moveable bus bar arrangement enhances the friction on contact elements, which are arranged at the contact points of the bus bar arrangement, so that the contact elements could be easily damaged. The contact elements, which are for example made of silver or any silver alloy to form silver buttons, or of other suitable electrically conducting materials are usually sensitive structures, are however advantageous, since they allow for reducing a contact resistance in the series connection state and in the parallel connection state. Hence, damaging of the contact elements could result in a serious degradation of the performance of the switching device 100.

Accordingly, for reducing the friction on the contact elements, when opening the contacts between the moveable contact arrangement and the fixed contact arrangement, the moveable bus bar arrangement advantageously is separated from the fixed bus bars of the fixed bus bar arrangement by a linear movement, before the rotation of the moveable contact arrangement is performed. For example, when opening the contacts of the switching device 100, the moveable bus bar arrangement is lifted up in a direction parallel to the axis of rotation of the output member 128 (or of the driven member 124) before the rotation of the moveable contact arrangement is performed. Similar, when closing the contacts between the moveable contact arrangement and the fixed contact arrangement, the moveable bus bar arrangement advantageously is brought in contact with the fixed bus bars of the fixed bus bar arrangement by a linear movement, after the rotation of the moveable contact arrangement has been performed after the rotational movement of the moveable contact arrangement has been performed. For example, when opening the contacts of the switching device 100, the moveable bus bar arrangement is lowered in a direction parallel to the axis of rotation of the output member 128 (or of the driven member 124) after the rotation of the moveable contact arrangement has been performed.

In general, for linear moving the moveable bus bar arrangement, a second dedicated actuation element could be provided in the switching device 100, wherein the second actuation element generates a force for linearly moving the moveable bus bar arrangement, for example by lifting and lowering the output element 128. However, to simplify the configuration of the switching device 100, the linear movement of the moveable bus bar arrangement is advantageously also driven by the electric motor 117 and the transmission unit 116 is designed in such a manner that, for linearly moving the moveable bus bar arrangement, the torque generated by the electric motor 117 is translated into a linear force.

For this purpose, the transmission unit 116 converts the torque applied to the driven member 124 into an axial force, which acts upon the output member 128 in a direction parallel to the extension direction of the shaft 118, when the driven member 124 is rotated outside of the first angular range, to which the rotational movement of the output member 128 is restricted. By the applied axial force, the output member 128 is forced to move towards the fixed contact arrangement. In particular, when the driven member 124 is driven outside of the first angular range, the notches 160 of the driven member 124 disengage from the hubs 162 of the output member 128 and start sliding across the hubs 162. In order to allow for a smooth uncoupling when the hubs 162 are disengaged from the notches 160, in a preferable configuration the hubs 162 of the toothed hub profile are formed as beveled wedges and the notches 160 have a corresponding mating profile.

By the disengaging, the output member 128 is shifted by the hubs 162 in the direction parallel to the extension direction of the shaft 118 due to the interplay between the hubs 162 and the intermediate regions 168 of the driven member 124, which are provided between each adjacent notches 160 and are extending at an elevated height compared to the notches 160. The maximum shift of the output member 128 (and of the connection bus bars 130 and 132 carried by the output member 128) in the axial direction is accordingly given by the maximum height of the hubs 162 and by the elevation of the intermediate regions 168 (compared to the notches 160). In order to use the maximum shift for positioning the connection bus bars 130 and 132 on the fixed contact arrangement and to prevents an unwanted re-coupling of the driven member 124 with the output member 128 when the driven member 124 is driven outside the first angular range, the rotational movement of the driven member 124 is restricted to a second angular range.

For this purpose, as shown in Fig. 12, the freedom of rotational movement of the driven member 124 is restricted to the second angular range, which is the first angular range by protruding lugs 172, which protrude from the arms 126 of the driven member 124. The protruding lugs 172 interact with a wall structure 170, which functions as a driven member blocking element. The wall structure 170 extends upwards from the base of the housing base portion 112 at least until a height, where it can interact with the protruding lugs 172. Hereby, an inner radius of the wall structure 170 is designed to be smaller than a radius of the driven member 124 at the position of the protruding lugs 172. When the protruding lugs 172 reach the boarders of the second angular range, the protruding lugs 172 engage with the wall structure 170 by abutting against the wall structure 170 to stop the rotational movement of the driven member 124 in the clockwise or counterclockwise. Fig. 12 shows a schematic indication of the boarders of the second angular range by the continuous lines 164 and 166, where the protruding lugs 172 engage with the wall structure 170 (for illustration purposes only indicated for one of the lugs 172) in addition to the indication of the boarders of the first angular range by the dashed lines 150 and 152. In the shown example, one lug 172 is provided on each arm 126 of the driven member 124. However, depending on application scenarios also another number of lugs 172 per arm 126 or another number of arms 126 is possible, and the design of the wall structure 170 may be adapted accordingly.

As illustrated in Fig. 12, the freedom of radial movement of the driven member 124 or more specifically the radial movement of the lugs 172 of the driven member 124 is less restricted than the freedom of radial movement of the output member 128 or more specifically the radial movement of the lugs 158 of the output member 128. In particular, the second angular range encompasses the movement region I, where the driven member 124 is rotationally coupled to the output member 128, and in addition comprises the movement region II (between solid line 164 and dashed line 150) and movement region III (between solid line 166 and dashed line 152), where the driven member 124 applies an axial force on the output member 128 to change the elevation of the output member. The possible direction of movement of the driven member 124 in the first angular range is schematically indicated by the arrow 154.

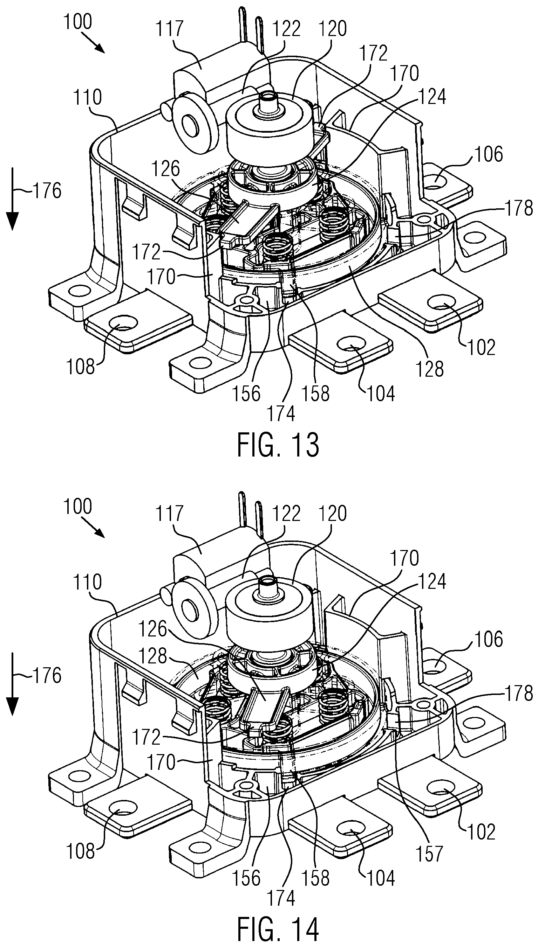

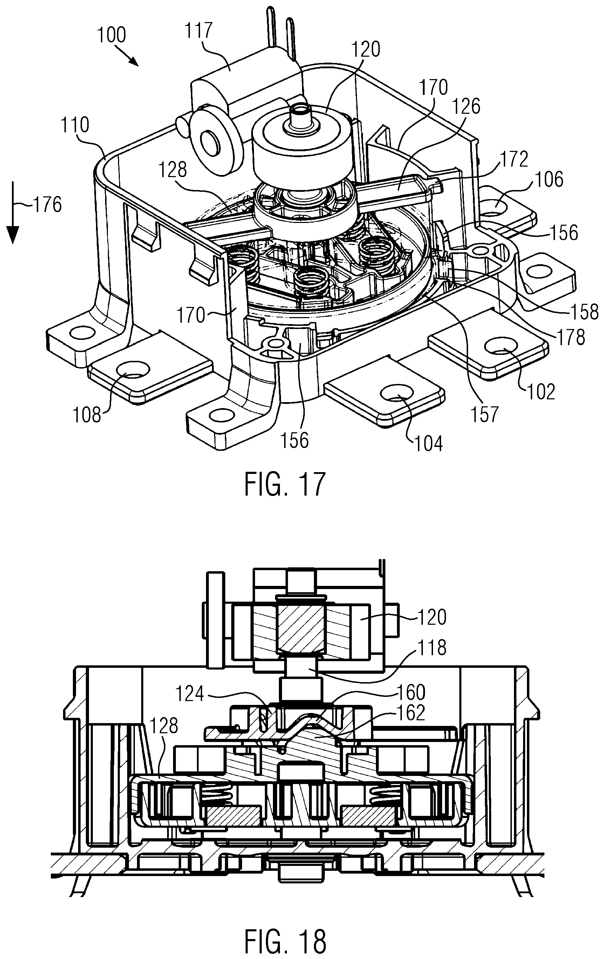

Figs. 13 to 17 show schematic perspective views of the switching device 100 at various points of the switching process when switching the switching device 100 from the series connection state (Fig. 13) to the parallel connection state (Fig. 17). To illustrate the functioning of the internal components of the switching device 100, especially of the transmission unit 116, during the switching process, the housing 110 of the switching device 100 is only partly shown in Figs. 13 to 17.

In the series connection state shown in Fig. 13, the driven member 124 experiences its maximum displacement in the clockwise direction (as seen from top of the switching device 100), so that the lugs 172 of the driven member 124 abut against the wall structures 170 in the clockwise direction. Also the output member 128 experiences its maximum displacement in the clockwise direction, so that the lugs 158 of the output member 128 abut against the wall structure 156 in the clockwise direction. Thereby, the lugs 158 are guided by a first guiding groove 174. The first guiding groove 174 restricts the movement of the output member 128 to an axial movement by engagement with the lugs 158 when the moveable bus bar arrangement is opening or closing the contacts with the fixed bus bar arrangement in the second switching position. Since the first guiding groove 174 is defined on one side of a part of the wall structure 156 extending to its full height and on the other by the lowered intermediate part 157 of the wall structure 156, the side walls of the first guiding groove 174 have asymmetric heights.

In the series connection state, the hubs 162 of the output member 128 are disengaged from the notches 160 of the driven member and by the interplay between the hubs 162 and the intermediate regions 168 of the driven member 124, the output member 128 is maximally displaced in the axial direction (indicated by arrow 176) away from the driven member 124. Accordingly, the output member 128 presses the first connection bus bar 130 and the second connection bus bar 132 on the fixed bus bar arrangement, so that the first input bus bar 140 and the second input bus bar 142 are electrically connected with each other by the first connection bus bar 130 (see Fig. 8).

Fig. 14 shows the switching device in a first position after the driven member 124 is rotated by the motor 117 in the counterclockwise direction (as seen from top of the switching device 100) away from the series connection state. In this position, which corresponds to a position in movement region II of Fig. 12, the displacement of the driven member 124 is lowered, but the driven member 124 is still driven outside the first angular range, so that the output member 128 still experiences its maximum displacement in the clockwise direction. Accordingly, the output member 128 is not rotated compared to the series connection state, so that the moveable bus bar arrangement still has the same orientation as in the second switching position, but is already elevated above the fixed bus bar arrangement. However, the hubs 162 of the output member 128 are already partly engaging with the notches 160 of the driven member 124, due to the return force applied by the return spring 129 on the output member 128 in the axial direction, opposite to the direction of arrow. Accordingly, the connection bus bars 130 and 132 of the moveable bus bar arrangement are lifted up in a linear movement compared to the series connection state of Fig. 13. In this position, the movement of the output member 128 is still restricted to a linear movement in the axial direction by the intermediate parts 157 of the wall structure 156, which engage with the lugs 158 of the output member 128 until the hub profile of the output member 128 is fully engaged with the notch profile of the driven member 124.

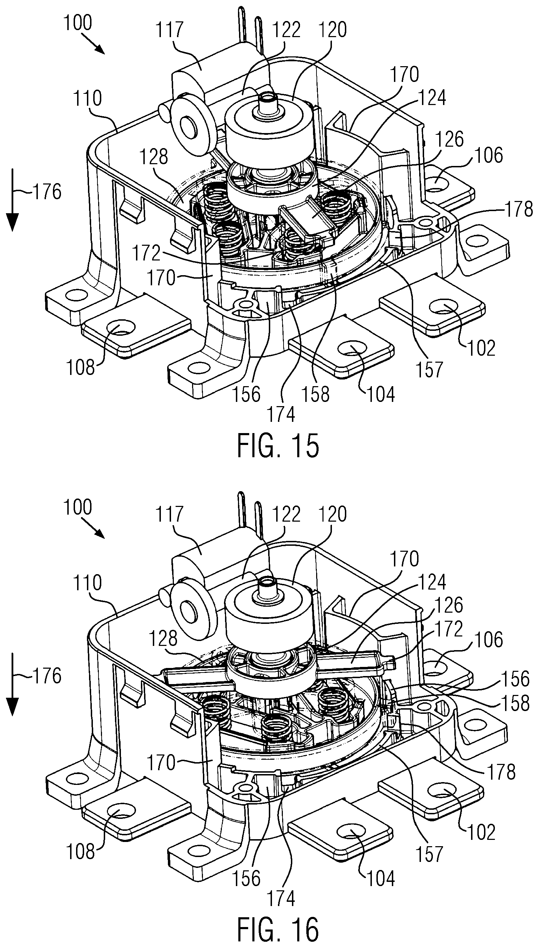

Fig. 15 shows the switching device 100 in a second position after the driven member 124 is rotated by the motor 117 in the counterclockwise direction away from the series connection state.

In this position, which corresponds to a position in movement region I of Fig. 12, the output member 128 is coupled the driven member in a form-fitting and rotational driving manner by a form-fitting engagement of the hub profile with the notch profile (see also the cross-section of Fig. 18). Accordingly, in this position the moveable bus bar arrangement is fully elevated and in a position, where it can be rotated. The torque applied to the driven member 124 is transferred to the output member 128 and drives the output member 128 in the counterclockwise direction, so that the moveable bus bar arrangement experiences a rotation in the counterclockwise direction towards the first switching position. Since the output member 128 is sufficiently lifted up, the lugs 158 of the output member 128 are not inhibited by the intermediate parts 157 of the wall structure 156.

Fig. 16 shows the switching device 100 in a third position after the driven member 124 is rotated by the motor 117 in the counterclockwise direction away from the series connection state. In this position, which corresponds to the boarder of movement region I indicated by dashed line 152 in Fig. 12, the output member reaches its maximum displacement in the counterclockwise direction. In this position, the lugs 158 of the output member abut against the wall structure 156 above second guiding grooves 178, which restrict the movement of the output member 128 to an axial movement by engaging of the lugs 158. The moveable bus bar arrangement already has the same orientation as in the first switching position (see Fig. 6), but is still elevated above the fixed bus bar arrangement. Due to the restriction of the rotational movement of the output member 128, the notches 160 start to disengage from the hubs 162 when the driven member 124 is rotated from the third position further in the counterclockwise direction, i.e. into the movement region III of Fig. 12. Accordingly, when the driven member 124 is rotated from the third position further in the counterclockwise direction the driven member acts an rotational force on the output member 128 in the axial direction by the interplay between the between the hubs 162 of the output member 128 and the intermediate regions 168 of the driven member 124, so that the output member 128 is moved in the axial direction along the direction 176.

Fig. 17 shows the switching device 100 in the series connection state, where the driven member 124 experiences its maximum displacement in the counterclockwise direction, so that the lugs 172 of the driven member 124 abut against the wall structure 170 in the counterclockwise direction. Also the output member 128 experiences its maximum displacement in the counterclockwise direction, so that the lugs 158 of the output member 128 abut against the wall structure 156 in the counterclockwise direction. Thereby, the lugs 158 are guided by a second guiding groove 178, which restrict the movement of the output member 128 to the axial movement when the moveable bus bar arrangement is opening or closing the contacts with the fixed bus bar arrangement in the first switching position. Since the second guiding groove 178 is defined on one side of a part of the wall structure 156 extending to its full height and on the other by the lowered intermediate part 157 of the wall structure 156, the side walls of the second guiding groove 178 have asymmetric heights.

In the series connection state, the hubs 162 of the output member 128 are disengaged from the notches 160 of the driven member and by the interplay between the hubs 162 and the intermediate regions 168 of the driven member 124, the output member 128 is maximally displaced in the axial direction (indicated by arrow 176) away from the driven member 124. Accordingly, in this position the output member 128 presses the first connection bus bar 130 and the second connection bus bar 132 on the fixed bus bar arrangement, so that the first input bus bar 140 is electrically connected by the first connection bus bar 130 to the first output bus bar 144 and the second input bus bar 142 is electrically connected by the second connection bus bar 132 to the second output bus bar 146 (see Fig. 6).

The switching process between the series connection state (Fig. 13) and the parallel connection state (Fig. 17) of the switching device 100 is reversible, so that the switching process from the parallel connection state to the series connection state proceeds analogously to the above description when the driven member 124 is driven by the electric motor 117 in the clockwise direction.

**Reference numerals**

| | |
|---|---|
| 10 | energy storage system |
| 100 | switching device |
| 102, 104 | input terminal |
| 106, 108 | output terminal |
| 110 | housing |
| 112 | housing base portion |
| 114 | housing cover |
| 115 | motor connection pins |
| 116 | transmission unit |
| 117 | (electric) motor |
| 118 | shaft |
| 120 | drive gear |
| 122 | worm |
| 124 | driven member |
| 126 | protruding arm |
| 128 | output member |
| 130, 132 | connection bus bars |
| 134, 136 | shells of the output member |
| 138 | spring elements |
| 139 | bus bar accommodation portion |
| 140, 142 | input bus bar |
| 144, 146 | output bus bars |
| 148 | contact point |
| 156 | wall structure |
| 157 | intermediate part of the wall structure |
| 158 | lugs of the output member |
| 160 | notches |
| 162 | hubs |
| 168 | intermediate regions |
| 170 | wall structure |
| 172 | lugs of the driven member |
| 174, 178 | guiding grooves |
| 500(1), 500(2) | High voltage batteries |
| 502, 504, 508, 510 | Battery terminals |
| 506 | high voltage bus |
| 512, 514 | nodes of the HV bus |

## Claims

1. A switching device (100) comprising:
a fixed bus bar arrangement, which comprises at least a pair of fixed input bus bars (140, 142) and a pair of fixed output bus bars (144, 146);
a moveable bus bar arrangement, which comprises at least a first connection bus bar (130) and a second connection bus bar (132); and
at least one actuation element (117), which is configured to change a position of the moveable bus bar arrangement at least to and from a first switching position and to and from a second switching position;
wherein in the first switching position, each of the fixed input bus bars (140, 142) is electrically connected to respectively one of the fixed output bus bars (144, 146), and in the second switching position, the pair of fixed input bus bars (140, 142) is electrically connected to each other, and
**characterized in that**
the switching device (100) further comprises a transmission unit (116) having at least one driven member (124) and at least one output member (128), which are coupled to one another in a rotationally driving manner in a first angular range, wherein the moveable bus bar arrangement is supported on the at least one output member (128), and
wherein the at least one driven member (124) applies an axial force upon the at least one output member (128), when the at least one driven member (124) is driven outside of the first angular range, such that the at least one output member (128) moves the moveable bus bar arrangement along a direction at least substantially parallel to the axis of rotation of the driven member (124), and
wherein the at least one actuation element (117) is configured to rotate the driven member (124) for changing the position of the moveable bus bar arrangement to and from the first switching position and to and from the second switching position.

2. The switching device (100) according to claim 1, wherein a rotational movement of the at least one output member (128) is restricted to the first angular range.

3. The switching device (100) according to one of claims 1 or 2, wherein the at least one output member (128) comprises a toothed hub profile, which mates with an interlocking notch profile of the at least one driven member (124) in a form-fitting and rotationally driving manner in the first angular range, and which disengages from the toothed hub profile, when the at least one driven member (124) is driven outside of the first angular range.

4. The switching device (100) according to claim 3, wherein the hubs (160) of the toothed hub profile are formed as beveled wedges.

5. The switching device (100) according to one of claims 1 to 4, wherein the at least one driven member (124) is mechanically connected to a shaft structure (118), which transfers a torque generated by the at least one actuation element (117) for changing the position of the moveable bus bar arrangement to the at least one driven member (124).

6. The switching device (100) according to one of claims 1 to 5, wherein a housing (110) of the switching device (100) comprises at least one output member blocking element (156), which is configured to engage with at least one lug (158) of the at least one output member (128) for restricting the rotational movement of the at least one output member (128) to the first angular range, and/or wherein the housing (110) of the switching device (100) comprises at least one driven member blocking element (170), which is configured to engage with at least one lug (172) of the at least one driven member (124) for restricting the rotational movement of the at least one driven member (124) to a second angular range, the second angular range being larger than the first angular range.

7. The switching device (100) according to claim 6, wherein the at least one output member blocking element (156) comprises at least one asymmetrically formed guiding groove (174, 178), which is designed to restrict a movement of the at least one output member (128) to an axial movement, when the at least one driven member (124) is driven outside of the first angular range.

8. The switching device (100) according to one of claims 1 to 7, wherein the at least one connection bus bar (130, 132) of the moveable bus bar arrangement is resiliently supported on the at least one output member by at least one biased spring element (138).

9. The switching device according to one of the preceding claims, wherein in the first switching position, the first connection bus bar (130) and the second connection bus bar (132) electrically connect respectively one of the fixed input bus bars (140, 142) to respectively one of the fixed output bus bars (144, 146).

10. The switching device (100) according to claim 9, wherein in the second switching position, the first connection bus bar (130) electrically connects the pair of fixed input bus bars (140, 142) with each other, and the second bus bar (132) is electrically connected to at most one of the fixed input bus bars (140, 142) or one of the fixed output bus bars (144, 146), and at least one contact point (148) of the second connection bus bar (132) is electrically isolated from the remaining bus bars of the fixed bus bar arrangement.

11. The switching device (100) according to one of the preceding claims, further comprising a first input terminal (102), which is electrically connected to one of the fixed input bus bars (140), and a second input terminal (104), which is electrically connected to another one of the fixed input bus bars (142), wherein the first input terminal (102) is configured to be electrically connected to a terminal (502) of a first battery and the second input terminal (104) is configured to be electrically connected to a terminal (504) of a second battery.

12. The switching device (100) according to one of the preceding claims, wherein the at least one actuation element (117) comprises an electric motor, which is configured to rotate the at least one driven member (124) of the transmission unit (116) for changing the position of the moveable bus bar arrangement, and/or wherein a force generated by the at least one actuation element (117) for changing the position of the moveable bus bar arrangement is transmitted by a worm gear (120, 122).

13. An energy storage system (10) comprising at least a first battery (500(1)) and a second battery (500(2)) and the switching device (100) according to any of the preceding claims, wherein the first battery (500(1)) and the second battery (500(2)) are electrically connected to the switching device (100) in such a manner, that the first battery (500(1)) and the second battery (500(2)) are switchable by the switching device (100) between a series state, in which the first battery (500(1)) and the second battery (500(2)) are electrically connected by the switching device (100) in series, and a parallel state, in which the first battery (500(1)) and the second battery (500(2)) are electrically connected by the switching device (100) in parallel.

## Patentansprüche

1. Schaltvorrichtung (100), umfassend:
eine stationäre Stromschienenanordnung, die mindestens ein Paar stationäre Eingangsstromschienen (140, 142) und ein Paar stationäre Ausgangsstromschienen (144, 146) umfasst;
eine bewegliche Stromschienenanordnung, die mindestens eine erste Verbindungsstromschiene (130) und eine zweite Verbindungsstromschiene (132) umfasst; und
mindestens ein Betätigungselement (117), das ausgestaltet ist, um eine Stellung der beweglichen Stromschienenanordnung mindestens zu und von einer ersten Schaltstellung und zu und von einer zweiten Schaltstellung zu ändern;
wobei in der ersten Schaltstellung jede der stationären Eingangsstromschienen (140, 142) mit jeweils einer der stationären Ausgangsstromschienen (144, 146) elektrisch verbunden ist, und in der zweiten Schaltstellung das Paar der stationären Eingangsstromschienen (140, 142) elektrisch miteinander verbunden ist, und
**dadurch gekennzeichnet, dass**
die Schaltvorrichtung (100) weiterhin eine Übertragungseinheit (116) mit mindestens einem angetriebenen Element (124) und mindestens einem Ausgabeelement (128) umfasst, die in einem ersten Winkelbereich drehantreibend miteinander gekoppelt sind, wobei die bewegliche Stromschienenanordnung von dem mindestens einen Ausgabeelement (128) getragen wird, und
wobei das mindestens eine angetriebene Element (124) eine axiale Kraft auf das mindestens eine Ausgabeelement (128) ausübt, wenn das mindestens eine angetriebene Element (124) außerhalb des ersten Winkelbereichs angetrieben wird, so dass das mindestens eine Ausgabeelement (128) die bewegliche Stromschienenanordnung entlang einer Richtung, die zumindest im Wesentlichen parallel zur Drehachse des angetriebenen Elements (124) verläuft, bewegt, und
wobei das mindestens eine Betätigungselement (117) ausgestaltet ist, um das angetriebene Element (124) zu drehen, um die Stellung der beweglichen Stromschienenanordnung zu und von der ersten Schaltstellung und zu und von der zweiten Schaltstellung zu ändern.

2. Schaltvorrichtung (100) nach Anspruch 1, wobei eine Drehbewegung des mindestens einen Ausgabeelements (128) auf den ersten Winkelbereich beschränkt ist.

3. Schaltvorrichtung (100) nach einem der Ansprüche 1 oder 2, wobei das mindestens eine Ausgabeelement (128) ein Zahnnabenprofil umfasst, das im ersten Winkelbereich formschlüssig und drehantreibend mit einem Verzahnungskerbenprofil des mindestens einen angetriebenen Elements (124) zusammenwirkt und das sich vom Zahnnabenprofil löst, wenn das mindestens eine angetriebene Element (124) außerhalb des ersten Winkelbereichs angetrieben wird.

4. Schaltvorrichtung (100) nach Anspruch 3, wobei die Naben (160) des Zahnnabenprofils als abgeschrägte Keile ausgebildet sind.

5. Schaltvorrichtung (100) nach einem der Ansprüche 1 bis 4, wobei das mindestens eine angetriebene Element (124) mechanisch mit einer Wellenstruktur (118) verbunden ist, die ein von dem mindestens einen Betätigungselement (117) erzeugtes Drehmoment zum Ändern der Stellung der beweglichen Stromschienenanordnung auf das mindestens eine angetriebene Element (124) überträgt.

6. Schaltvorrichtung (100) nach einem der Ansprüche 1 bis 5, wobei ein Gehäuse (110) der Schaltvorrichtung (100) mindestens ein Blockierelement (156) für das Ausgabeelement umfasst, das ausgestaltet ist, um mit mindestens einer Nase (158) des mindestens einen Ausgabeelements (128) in Eingriff zu treten, um die Drehbewegung des mindestens einen Ausgabeelements (128) auf den ersten Winkelbereich zu beschränken, und/oder wobei das Gehäuse (110) der Schaltvorrichtung (100) mindestens ein Blockierelement (170) für das angetriebene Element umfasst, das ausgestaltet ist, um mit mindestens einer Nase (172) des mindestens einen angetriebenen Elements (124) in Eingriff zu kommen, um die Drehbewegung des mindestens einen angetriebenen Elements (124) auf einen zweiten Winkelbereich zu beschränken, wobei der zweite Winkelbereich größer ist als der erste Winkelbereich.

7. Schaltvorrichtung (100) nach Anspruch 6, wobei das mindestens eine Blockierelement (156) für das Ausgabeelement mindestens eine asymmetrisch ausgebildete Führungsnut (174, 178) umfasst, die dazu ausgelegt ist, eine Bewegung des mindestens einen Ausgabeelements (128) auf eine axiale Bewegung zu beschränken, wenn das mindestens eine angetriebene Element (124) außerhalb des ersten Winkelbereichs angetrieben wird.

8. Schaltvorrichtung (100) nach einem der Ansprüche 1 bis 7, wobei die mindestens eine Verbindungsstromschiene (130, 132) der beweglichen Stromschienenanordnung mittels mindestens eines vorgespannten Federelements (138) federnd von dem mindestens einen Ausgabeelement getragen wird.

9. Schaltvorrichtung nach einem der vorhergehenden Ansprüche, wobei in der ersten Schaltstellung die erste Verbindungsstromschiene (130) und die zweite Verbindungsstromschiene (132) jeweils eine der stationären Eingangsstromschienen (140, 142) mit jeweils einer der stationären Ausgangsstromschienen (144, 146) elektrisch verbinden.

10. Schaltvorrichtung (100) nach Anspruch 9, wobei in der zweiten Schaltstellung die erste Verbindungsstromschiene (130) das Paar der stationären Eingangsstromschienen (140, 142) elektrisch miteinander verbindet und die zweite Verbindungsstromschiene (132) mit höchstens einer der stationären Eingangsstromschienen (140, 142) oder einer der stationären Ausgangsstromschienen (144, 146) elektrisch verbunden ist, und mindestens ein Kontaktpunkt (148) der zweiten Verbindungsstromschiene (132) von den übrigen Stromschienen der stationären Stromschienenanordnung galvanisch getrennt ist.

11. Schaltvorrichtung (100) nach einem der vorhergehenden Ansprüche, weiterhin umfassend eine erste Anschlussklemme (102), die elektrisch mit einer der stationären Eingangsstromschienen (140) verbunden ist, und eine zweite Anschlussklemme (104), die elektrisch mit einer anderen der stationären Eingangsstromschienen (142) verbunden ist, wobei die erste Anschlussklemme (102) so ausgestaltet ist, dass sie elektrisch mit einem Anschluss (502) einer ersten Batterie verbunden ist, und die zweite Anschlussklemme (104) so ausgestaltet ist, dass sie elektrisch mit einem Anschluss (504) einer zweiten Batterie verbunden ist.

12. Schaltvorrichtung (100) nach einem der vorhergehenden Ansprüche, wobei das mindestens eine Betätigungselement (117) einen Elektromotor umfasst, der ausgestaltet ist, um das mindestens eine angetriebene Element (124) der Übertragungseinheit (116) zum Ändern der Stellung der beweglichen Stromschienenanordnung zu drehen, und/oder wobei eine von dem mindestens einen Betätigungselement (117) erzeugte Kraft zum Ändern der Stellung der beweglichen Stromschienenanordnung durch ein Schneckengetriebe (120, 122) übertragen wird.

13. Energiespeichersystem (10), umfassend mindestens eine erste Batterie (500(1)) und eine zweite Batterie (500(2)) und die Schaltvorrichtung (100) nach einem der vorhergehenden Ansprüche, wobei die erste Batterie (500(1)) und die zweite Batterie (500(2)) mit der Schaltvorrichtung (100) derart elektrisch verbunden sind, dass die erste Batterie (500(1)) und die zweite Batterie (500(2)) durch die Schaltvorrichtung (100) zwischen einem Reihenverbindungs-Zustand, in dem die erste Batterie (500(1)) und die zweite Batterie (500(2)) durch die Schaltvorrichtung (100) elektrisch in Reihe verbunden sind, und einem Parallelverbindungs-Zustand, in dem die erste Batterie (500(1)) und die zweite Batterie (500(2)) durch die Schaltvorrichtung (100) elektrisch parallel verbunden sind, umschaltbar sind.

## Revendications

1. Dispositif de commutation (100) comprenant :
un agencement de barres omnibus fixes, qui comprend au moins une paire de barres omnibus d'entrée fixes (140, 142) et une paire de barres omnibus de sortie fixes (144, 146) ;
un agencement de barres omnibus mobiles, qui comprend au moins une première barre omnibus de connexion (130) et une seconde barre omnibus de connexion (132) ; et
au moins un élément d'actionnement (117), qui est configuré pour modifier la position de l'agencement de barres omnibus mobiles au moins vers et depuis une première position de commutation et vers et depuis une seconde position de commutation ;
dans lequel, dans la première position de commutation, chacune des barres omnibus d'entrée fixes (140, 142) est électriquement connectée à une barre omnibus respective des barres omnibus de sortie fixes (144, 146) et, dans la seconde position de commutation, la paire de barres omnibus d'entrée fixes (140, 142) sont électriquement connectées l'une à l'autre, et
**caractérisé en ce que**
le dispositif de commutation (100) comprend en outre une unité de transmission (116) ayant au moins un organe entraîné (124) et au moins un organe de sortie (128), qui sont couplés l'un à l'autre par entraînement en rotation dans une première plage angulaire, dans lequel l'agencement de barres omnibus mobiles est supporté sur l'au moins un organe de sortie (128), et
dans lequel l'au moins un organe entraîné (124) applique une force axiale sur l'au moins un organe de sortie (128) lorsque l'au moins un organe entraîné (124) est entraîné en dehors de la première plage angulaire, de sorte que l'au moins un organe de sortie (128) déplace l'agencement de barres omnibus mobiles le long d'une direction au moins sensiblement parallèle à l'axe de rotation de l'organe entraîné (124), et
dans lequel l'au moins un élément d'actionnement (117) est configuré pour faire tourner l'organe entraîné (124) afin de modifier la position de l'agencement de barres omnibus mobiles vers et depuis la première position de commutation et vers et depuis la seconde position de commutation.

2. Dispositif de commutation (100) selon la revendication 1, dans lequel le mouvement de rotation de l'au moins un organe de sortie (128) est limité à la première plage angulaire.

3. Dispositif de commutation (100) selon l'une des revendications 1 ou 2, dans lequel l'au moins un organe de sortie (128) comprend un profil de moyeu denté qui s'accouple avec un profil d'encoche de verrouillage de l'au moins un organe entraîné (124) par complémentarité de forme et entraînement en rotation dans la première plage angulaire, et qui se désengage du profil de moyeu denté lorsque l'au moins un organe entraîné (124) est entraîné en dehors de la première plage angulaire.

4. Dispositif de commutation (100) selon la revendication 3, dans lequel les moyeux (160) du profil de moyeu denté sont formés comme des coins biseautés.

5. Dispositif de commutation (100) selon l'une des revendications 1 à 4, dans lequel l'au moins un organe entraîné (124) est mécaniquement connecté à une structure d'arbre (118) qui transfère un couple généré par l'au moins un élément d'actionnement (117) pour modifier la position de l'agencement de barres omnibus mobiles à l'au moins un organe entraîné (124).

6. Dispositif de commutation (100) selon l'une des revendications 1 à 5, dans lequel un boîtier (110) du dispositif de commutation (100) comprend au moins un élément de blocage d'organe de sortie (156), qui est configuré pour s'engager avec au moins une patte (158) de l'au moins un organe de sortie (128) afin de limiter le mouvement de rotation de l'au moins un organe de sortie (128) à la première plage angulaire, et/ou dans lequel le boîtier (110) du dispositif de commutation (100) comprend au moins un élément de blocage d'organe entraîné (170), qui est configuré pour s'engager avec au moins une patte (172) de l'au moins un organe entraîné (124) afin de limiter le mouvement de rotation de l'au moins un organe entraîné (124) à une seconde plage angulaire, la seconde plage angulaire étant supérieure à la première plage angulaire.

7. Dispositif de commutation (100) selon la revendication 6, dans lequel l'au moins un élément de blocage d'organe de sortie (156) comprend au moins une rainure de guidage (174, 178) de forme asymétrique, qui est conçue pour limiter le mouvement de l'au moins un organe de sortie (128) à un mouvement axial, lorsque l'au moins un organe entraîné (124) est entraîné en dehors de la première plage angulaire.

8. Dispositif de commutation (100) selon l'une des revendications 1 à 7, dans lequel l'au moins une barre omnibus de connexion (130, 132) de l'agencement de barres omnibus mobiles est supportée élastiquement sur l'au moins un organe de sortie par au moins un élément ressort sollicité (138).

9. Dispositif de commutation selon l'une des revendications précédentes, dans lequel, dans la première position de commutation, la première barre omnibus de connexion (130) et la seconde barre omnibus de connexion (132) connectent électriquement une barre omnibus respective des barres omnibus d'entrée fixes (140, 142) à une barre omnibus respective des barres omnibus de sortie fixes (144, 146).

10. Dispositif de commutation (100) selon la revendication 9, dans lequel, dans la seconde position de commutation, la première barre omnibus de connexion (130) connecte électriquement la paire de barres omnibus d'entrée fixes (140, 142) entre elles, et la seconde barre omnibus (132) est électriquement connectée à au plus l'une des barres omnibus d'entrée fixes (140, 142) ou l'une des barres omnibus de sortie fixes (144, 146), et au moins un point de contact (148) de la seconde barre omnibus de connexion (132) est électriquement isolé des barres omnibus restantes de l'agencement de barres omnibus fixes.

11. Dispositif de commutation (100) selon l'une des revendications précédentes, comprenant en outre une première borne d'entrée (102), qui est électriquement connectée à l'une des barres omnibus d'entrée fixes (140), et une seconde borne d'entrée (104), qui est électriquement connectée à une autre barre omnibus des barres omnibus d'entrée fixes (142), dans lequel la première borne d'entrée (102) est configurée pour être électriquement connectée à une borne (502) d'une première batterie et la seconde borne d'entrée (104) est configurée pour être électriquement connectée à une borne (504) d'une seconde batterie.

12. Dispositif de commutation (100) selon l'une des revendications précédentes, dans lequel l'au moins un élément d'actionnement (117) comprend un moteur électrique qui est configuré pour faire tourner l'au moins un organe entraîné (124) de l'unité de transmission (116) afin de modifier la position de l'agencement de barres omnibus mobiles, et/ou dans lequel une force générée par l'au moins un élément d'actionnement (117) pour modifier la position de l'agencement de barres omnibus mobiles est transmise par un engrenage à vis sans fin (120, 122).

13. Système de stockage d'énergie (10) comprenant au moins une première batterie (500(1)) et une seconde batterie (500(2)) et le dispositif de commutation (100) selon l'une des revendications précédentes, dans lequel la première batterie (500(1)) et la seconde batterie (500(2)) sont électriquement connectées au dispositif de commutation (100) de manière à ce que la première batterie (500(1)) et la seconde batterie (500(2)) soient commutables par le dispositif de commutation (100) entre un état série, dans lequel la première batterie (500(1)) et la seconde batterie (500(2)) sont électriquement connectées par le dispositif de commutation (100) en série, et un état parallèle, dans lequel la première batterie (500(1)) et la seconde batterie (500(2)) sont électriquement connectées par le dispositif de commutation (100) en parallèle.
